# EUROPEAN PATENT SPECIFICATION

(11) **EP 3 460 235 B1**
(45) Date of publication and mention of the grant of the patent: **23.11.2022**
(21) Application number: 18153475.1
(22) Date of filing: 25.01.2018
(51) Int. Cl.: F03D 7/06, F03D 3/06

(54) **VERTICAL AXIS WIND TURBINE AND PITCH REGULATION MECHANISM FOR A VERTICAL AXIS WIND TURBINE**
WINDTURBINE MIT VERTIKALER ACHSE UND PITCH-REGULIERMECHANISMUS FÜR EINE WINDTURBINE MIT VERTIKALER ACHSE
ÉOLIENNE À AXE VERTICAL ET MÉCANISME DE RÉGULATION DE PAS POUR UNE ÉOLIENNE À AXE VERTICAL

(43) Date of publication of application: 27.03.2019
(73) Proprietor: ABC Franchise International B.V., 5363 SX Velp (NL)
(72) Inventor: Jabbour, Naaman, Latakia (SY)
(74) Representative: IP Maison

(56) References cited:
- WO-A1-82/04103
- WO-A2-2006/030190
- US-A- 4 430 044
- US-A1- 2003 235 498

## Description

The invention relates to a pitch regulation mechanism and a vertical axis wind turbine comprising the pitch regulation mechanism.

Due to the ever increasing concerns of climate change, which relate to the rising concentrations of greenhouse gases in the atmosphere, renewable energy sources have become increasingly popular. The major renewable energy sources currently being implemented on a large scale are sun, solar and wind power. For the latter of these sources one requires wind turbines for capturing energy from the wind and converting this to a rotary motion which powers the electrical generators for obtaining the electrical energy. Windmills and turbines have been around for many centuries and have been a major source of energy for a number of societies throughout history before being overtaken by fossil fuel based energy sources. Nonetheless, wind energy has made a comeback since the 1970's and is again starting to become a major source of energy.

Throughout these years many different developments have led to different types of wind turbines, whereas the windmill-like horizontal axis wind turbines (HAWT) are likely the best known. Apart from these, a second class of turbines exists, the so called vertical axis wind turbines (VAWT). These wind turbines characterize themselves in the fact that the rotor spins around a vertical axis, whereby the generator is often situated close to the ground, instead of on a large pole, or tower, as is the case with the HAWT's.

Vertical axis wind turbines can generally be divided into two types, those comprising Savonius-type rotors and those comprising Darrieus-type rotors. The Savonius-type works mainly on the basis of a difference in drag, thereby limiting the maximum efficiency. The benefit of this type of turbine however, is its simplicity in design and the fact that it will starts operating automatically once it captures enough wind. The Darrieus-type, on the other hand, operates on the basis of lift generated over the blades, which enables higher rotational speeds and a higher efficiency. The downside of the latter type is that they are not "self-starting" and that, despite the wind, they need to be actively started in order to start operating. US4,430,044 and US2003/0235498 disclose Darrieus-type rotors with pitching blades for "self-starting" purposes. It is an object of the invention to address the above mentioned problems of the vertical axis wind turbines.

To that end a vertical axis wind turbine is provided, comprising a generator for generating electrical energy, a drive train coupled to said generator at a first end of the drive train, a rotor coupled to said drive train at a second end of the drive train, wherein the rotor comprises a blade support structure extending from the center of the rotor, a blade pivotally coupled to the blade support structure at a distance from the center of the rotor, wherein the blade is oriented substantially vertical, and a pitch regulating mechanism arranged between the blade support structure and the blade arranged to regulate the pitch of the blade in dependence of wind force acting on the wind turbine, wherein the pitch regulating mechanism comprises a first part, a second part, and a torsional spring assembly; wherein the first part is connected to the blade support structure, the second part is connected to the blade, wherein the second part is pivotally coupled to the first part and the torsional spring assembly is arranged between the first part and the second part and arranged to exercise a pivotal spring force on the first and second parts in two opposite rotational directions, and wherein the torsional spring has a first stiffness in the first rotational direction and a second stiffness in the second rotational direction. By allowing the blades of the wind turbine to pitch due to the applied wind force, the blade that is located upstream of the wind, with respect to the central axis of the turbine, will pitch inwardly. Due to the inwardly pitching of the upstream blade, a torque acting around the central axis of the turbine will the generated, causing the (stand-still) rotor of the wind turbine to start rotating, thereby allowing the turbine to start automatically. Once the turbine starts rotating, a combination of the lift and drag forces acting on the blade will generate a torque acting around the central axis of the turbine, ensuring the turbine keeps rotating. Also, as the blade can pitch both in- and outwardly, the blade is allowed to pitch if a strong wind gust passes, thereby reducing the extreme, and potentially destructive, forces such a gust might otherwise exert on the blade and/or the rest of the structure.

According to the invention, , the first stiffness has a lower value than the second stiffness. When the turbine is in operation the higher value of the second stiffness ensures that the outwardly pitching of the blade, due to the centrifugal forces acting on the blade, at higher rotational speeds is limited. Thereby, the wind turbine is also able to operate efficiently at higher rotational speeds.

In another preferred embodiment of the vertical axis wind turbine, the torsional spring assembly comprises a crank assembly, for transferring a rotational movement of the second part to a translational movement, and a first and second elastic element, wherein the crank assembly and elastic elements are arranged such that the first elastic element is deformed by the translational movement when the second part is rotated in the first rotational direction and the second elastic element is deformed when the second part is rotated in the second rotational direction. Hereby a simple, robust and easily to modify torsional spring assembly is obtained. The elastic elements can simply be replaced by stiffer or softer types in order to adjust the pitch regulation mechanism for optimum control.

In a further preferred embodiment the first and second elastic elements are deformed when the second part is rotated in the second rotational direction. Hereby, the stiffness of the first elastic element is also employed for achieving the higher stiffness in the second rotational direction. Alternatively, or as an ever further preferred embodiment, the first elastic element is softer than the second elastic element. Thereby, a rotational spring is easily obtained with the first stiffness which is lower than the second stiffness. Preferably, the first and second elastic elements are formed by leaf springs, as the use of leaf springs enables a robust and simple construction of the pitch regulation mechanism. Also, the stiffness of the elastic elements is simply adjusted by arranging, or stacking, multiple leaf springs, thereby obtaining a single elastic element with a desired stiffness.

In a preferred embodiment the crank assembly comprises a shaft, said shaft comprises two outwardly extending protrusions in opposite direction of the shaft, and wherein contact rollers are provided onto the outwardly extending protrusions for contacting the elastic elements. In a further preferred embodiment one of the two outwardly extending protrusions is substantially triangular shaped and the other of the two outwardly extending protrusions is substantially rectangular shaped. By providing contact rollers at the contact edges of the outwardly extending protrusions, a rolling contact is obtained between the outwardly extending protrusions and the elastic elements. The rolling contact will minimize undesired friction in the torsional spring assembly and thereby also minimize unwanted hysteretic behavior of the torsional spring assembly and/or stick-slip effects in the pitch regulation mechanism.

In a preferred embodiment of the vertical axis wind turbine the rotor comprises four blades, the blades are all oriented substantially vertical and wherein each blade is coupled to the blade support structure by means of the pitch regulating mechanism. A single blade experiences varying forces over a single rotation around the vertical axis, which leads to variations of the torque and trusts forces transferred to the structure of the turbine and the generator. Increasing the number of blades to four significantly reduces the torque and thrust force ripples, which is beneficial for the fatigue life of the structure as well as achieving a more constant rotational speed and thereby a more constant output of electrical energy.

In a preferred embodiment of the vertical axis wind turbine the blade pitch axis is arranged near the leading edge of the blade. By arranging the blade pitch axis near the leading edge of the blade, the centrifugal forces acting on the blades at higher rotational speeds urge the blades outwardly, thereby counteracting the trust forces acting on the upstream blade, which urge the blades to pitch inwardly. As, at higher rotational speeds, a reduced pitch is beneficial for the inflow conditions around the blade, an efficient pitch control can obtained. By adjusting the first and second stiffness's with respect to the mass and rotational inertia of the blade (around the blade pitch axis), an effective and simple pitch regulation mechanism is obtained, which is able to control the pitch at low and high rotor speeds and in high and low wind speeds. In addition, if the rotor starts to accelerate towards its critical speed, the blades will pitch out further due to the increasing centrifugal forces, thereby the inflow conditions become less optimal, whereby the rotor will automatically slow down. Hence, such a pitch regulation device is also able to prevent a possible over-speed of the rotor.

In a preferred embodiment of the vertical axis wind turbine the blade is pivotally connected to the blade support structure at the longitudinal ends of the blade and the pitch regulating mechanism is arranged at a location along the longitudinal length of the blade. As the pitch regulation mechanism is not arranged at the outer ends of the blade, the torsional deformation of the blade along the longitudinal length is reduced. Such torsional deformation of the blade is undesirable as it can reduce the aerodynamic performance. It is further preferred if the pitch regulating mechanism is arranged at a location near the middle of the longitudinal length of the blade, thereby minimizing the torsional deformations of the blade in case a single pitch regulating mechanism is used per blade. In a further preferred embodiment, the blade is fitted with multiple pitch regulating mechanisms, thereby reducing the torsional deformation of the blade even further.

In a preferred embodiment of the vertical axis wind turbine the blade has a symmetrical cross section. Hereby, the blade is cheap and easy to manufacture.

Furthermore the invention relates to a pitch regulating mechanism for a vertical axis wind turbine, arranged to regulate the pitch of a blade of the wind turbine in dependence of wind force acting on the wind turbine, wherein the pitch regulating mechanism comprises a first part, a second part, and a torsional spring assembly; wherein the first part is arranged to be connectable to a blade support structure of the wind turbine, the second part is arranged to be connectable to a blade, wherein the second part is pivotally coupled to the first part and the torsional spring assembly is arranged between the first part and the second part and arranged to exercise a pivotal spring force on the first and second parts in two opposite rotational directions, and wherein the torsional spring has a first stiffness in the first rotational direction and a second stiffness in the second rotational direction. Such a pitch regulation mechanism can be applied in a vertical axis wind turbine and enables the turbine to self-start, while at the same time shield the structure from extreme forces due to severe wind gusts.

The invention will now be explained in detail with reference to figures illustrated in the accompanying drawings.
Figure 1 shows an embodiment of a vertical axis wind turbine according to the invention in a frontal view.
Figure 2 shows, in a top view, the same embodiment of the vertical axis wind turbine.
Figure 3 shows, in a top view, the pitching of the upstream blade due to the wind loading applied to the blade.
Figure 4 shows a perspective view of a blade with, at both ends, an embodiment of the pitch regulation mechanism according to the invention.
Figure 5 shows a cross-sectional side-view of the embodiment of the pitch regulation mechanism according to the invention.
Figure 6 shows a cross-sectional top-view of the embodiment of the pitch regulation mechanism according to the invention, wherein the blade is pitched in a first rotational direction.
Figure 7 shows a cross-sectional top-view of the embodiment of the pitch regulation mechanism according to the invention, wherein the blade is pitched in a second rotational direction.

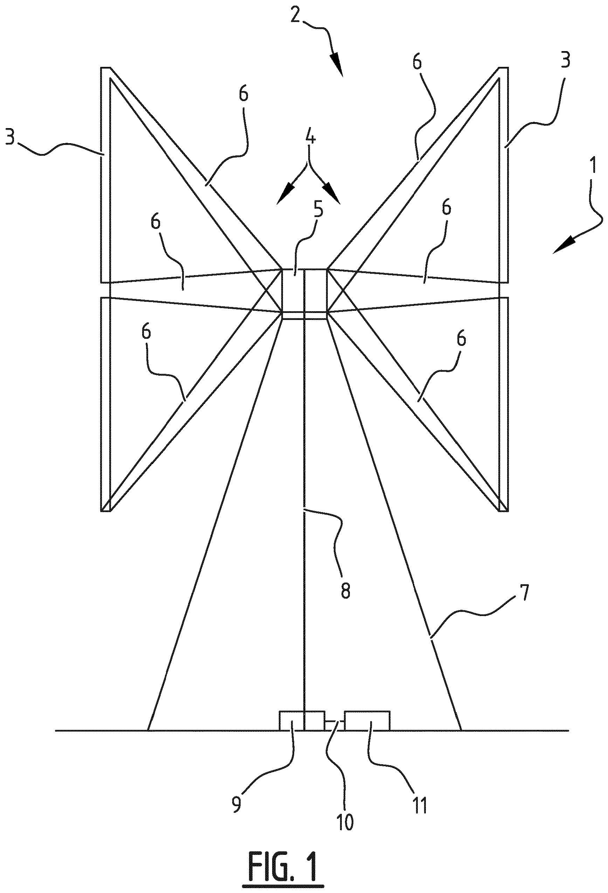

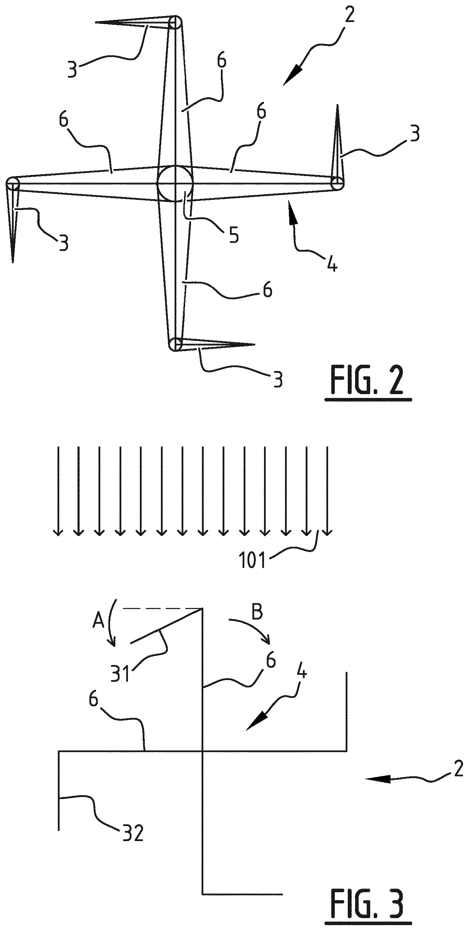

An embodiment of a vertical axis wind turbine 1 according to the invention is shown in figure 1 in a frontal view and in figure 2 in a top view. A Rotor 2 is provided comprising a number of blades 3, with a symmetrical airfoil, for capturing the energy of the wind. These blades 3 are mounted on a blade support structure 4, comprising a number of blade support elements 6, which are connected on the one end to the blades 3 and on the other end to centrally located hub 5 of the rotor. The hub is mounted on top of a tower structure 7 by means of a connecting bearing, thereby allowing the rotor 2 to spin on top of the tower structure 7. The rotor 3 is attached to a main shaft 8, which transfers the rotational motion of the rotor 3 to a gearbox 9. A secondary shaft 10 is then mounted in between the gearbox 9 and a generator 11. The gearbox 9 typically comprises a number of bearings, a parallel shaft gear, a planetary gear and/or a differential gear and is generally customized such that the generator 11 is allowed to spin at its preferred rotational speeds, for generating electricity at the desired voltage and preferably at the right frequency. Note that the combination of main shaft 8, gearbox 9 and secondary shaft 10 is commonly referred to as the drive train. Such a turbine 1 is often fitted with additional power electronics for either converting the electricity to match the frequency and voltages in the attached alternate current grid. Alternatively, the turbine is not connected to an electrical grid, but is used in a local (directcurrent) network comprising storage means, such a batteries. In that case, power electronics suited for converting the alternating current, supplied by the generator, to direct current are typically employed.

Figure 3 shows schematically in a top view, the pitching of the upstream blade 31 due to the wind loading applied to the blade. The rotor is initially at stand-still here. The incoming wind 101 leads to a force on upstream side of the upstream blade 31, thereby the upstream blade 31 pitches in the direction A. Due to this pitching, the combined drag and lift forces applied onto the upstream blade will result into a torque around the main shaft of vertical axis wind turbine, thereby the rotor will start spinning in the direction B. By this rotation, blade 31 moves to the 90 degree position, during which the pitch is slowly decreased as the blade captures less wind forces onto its side surface and the pitch regulation mechanism 20 forces the blade 31 back in its original orientation with respect to the blade support element 6. At the same time, blade 32 will move towards the upstream position and thereby starts catching the wind forces onto its side surface. As a result, the blade 32 will also gradually start pitching up to the point where the force is reduced again, and the pitch regulation mechanism 20 forces the blade 32 back in its original orientation with respect to the blade support element 6.

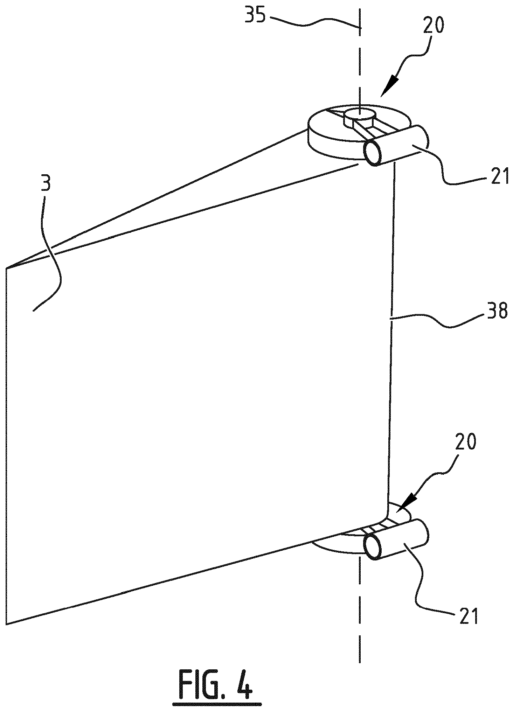

The pitch regulation mechanism 20 is shown in a perspective view in figure 4. Here one pitch regulation mechanism 20 is provided on both ends of the blade 3. Connecting means 21 for connecting the blade to the blade support elements are provided as well. In addition it is seen that the blade pitch axis 35 is located close to the leading edge 38 of the blade.

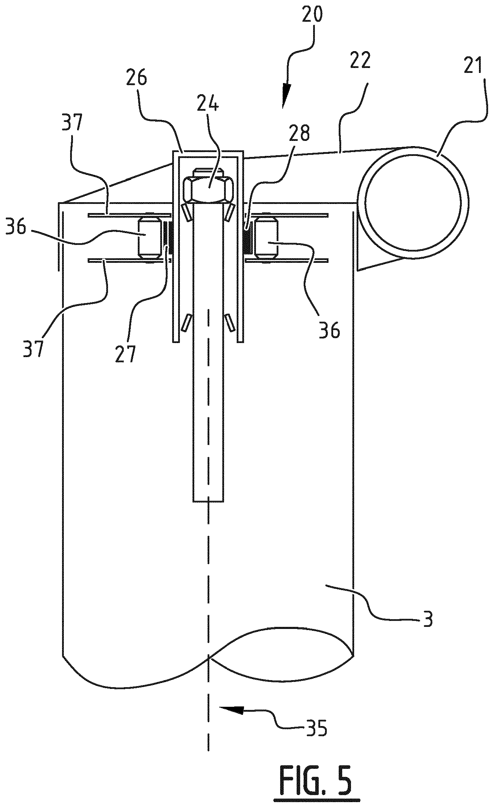

Figures 5, 6 and 7 show the pitch regulation mechanism 20 in more detail. The pitch regulating mechanism 20 comprises a cover 22, which is provided at the end of the blade 3. The blade further comprises a pitch shaft 33, whose axis coincided with the blade pitch axis 35. The blade is connected, by means of bearings 25 to a hollow shaft 26, which is connected to the cover 22, and is secured using a locking nut 24. Furthermore, a first stack of leaf springs 27 and a second stack of leaf springs 28 are situated along the hollow shaft 26. These stacks of leaf springs 27, 28 are located in between the hollow shaft 26 and a number of support rollers 36. These support rollers 36 are connected to the blade 3 through a number of support ribs 37.

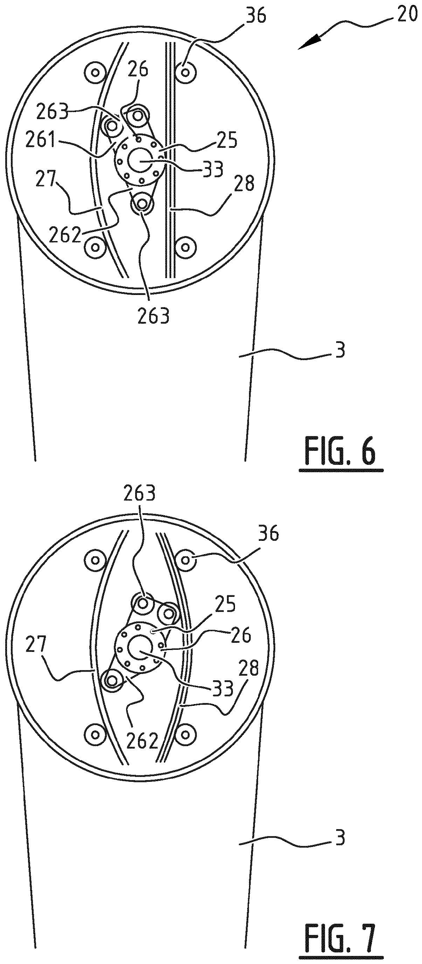

The working principle of the pitch regulating mechanism is demonstrated in figures 6 and 7. The hollow shaft 26 comprises two outwardly extending protrusions, the first outwardly extending protrusion 261 is substantially rectangular shaped and the second outwardly extending protrusion 262 is substantially triangular shaped. In addition, the contact-edges of the outwardly extending protrusions are fitted with contact roller 263 for contacting the two stacks of leaf springs 27, 28. By pitching the blade in a first direction, a contact roller 263 which is mounted on the first outwardly extending protrusion 261 starts to deform the first stack of leaf springs 27, thereby the stack of leaf springs 27 will generate an elastic reaction force on the contact roller 263. This reaction force, which applies at a distance of the rotational axis of the hollow shaft 26, generates a moment opposing the pitching rotation of the blade.

If, as seen in figure 7, the blade pitches in the second direction the two outwardly extending protrusions 261, 262 work together to generate a counter moment. The first outwardly extending protrusion 261 deforms the second stack of leaf springs 28 and the second outwardly extending protrusion 262 deforms the first stack of leaf springs 27. Thereby a much stronger counter force and thus torque is generated, which thus results in a torsional spring with a higher stiffness in the second rotational direction, than in the first rotational direction. The higher stiffness in the second direction thus prevents that the blades will pitch too much outwardly when the rotor rotates at higher rotational speeds. At the same, as the outward pitching motion is not fully constrained, the turbine will be able to handle strong wind gusts, which would otherwise lead to extreme forces on the blades and the rest of the structure.

## Claims

1. Pitch regulating mechanism (20) for a vertical axis wind turbine (1) arranged to regulate the pitch of a blade (3) of the wind turbine in dependence of wind force acting on the wind turbine, wherein the pitch regulating mechanism comprises:
- a first part (22),
- a second part (36), and
- a torsional spring assembly (26, 27, 28);
wherein the first part is arranged to be connectable to a blade support structure (4) of the wind turbine, the second part is arranged to be connectable to a blade (3), wherein the second part is pivotally coupled to the first part and the torsional spring assembly is arranged between the first part and the second part and arranged to exercise a pivotal spring force on the first and second parts in two opposite rotational directions, **characterized in that** the torsional spring assembly has a first stiffness in the first rotational direction and a second stiffness in the second rotational direction, and **in that** the first stiffness has a lower value than the second stiffness.

2. Pitch regulating mechanism according to claim 1, wherein the torsional spring assembly comprises a crank assembly (26, 261, 262, 263), for transferring a rotational movement of the second part to a translational movement, and a first (27) and second (28) elastic element, wherein the crank assembly and elastic elements are arranged such that the first elastic element is deformed by the translational movement when the second part is rotated in the first rotational direction and the second elastic element is deformed when the second part is rotated in the second rotational direction.

3. Pitch regulating mechanism according to claim 2, wherein the first and second elastic elements are deformed when the second part is rotated in the second rotational direction.

4. Pitch regulating mechanism according to claim 2 or 3 wherein the first elastic element is softer than the second elastic element.

5. Pitch regulating mechanism according to any of the preceding claims 2 - 4, wherein the first and second elastic elements are formed by leaf springs.

6. Pitch regulating mechanism according to any of the preceding claims 2 - 5, wherein the crank assembly comprises a shaft (26), said shaft comprises two outwardly extending protrusions (261, 262) in opposite direction of the shaft, and wherein contact rollers (263) are provided onto the outwardly extending protrusions for contacting the elastic elements.

7. Pitch regulating mechanism according to claim 6, wherein one of the two outwardly extending protrusions is substantially triangular shaped and the other of the two outwardly extending protrusions is substantially rectangular shaped.

8. Vertical axis wind turbine (1), comprising:
- a generator (11), for generating electrical energy;
- a drive train (8, 9, 10), coupled to said generator at a first end of the drive train;
- a rotor (2), coupled to said drive train at a second end of the drive train, wherein the rotor comprises a blade support structure (4) extending from the center of the rotor,
- a blade (3) pivotally coupled to the blade support structure at a distance from the center of the rotor, wherein the blade is oriented substantially vertical, and
- a pitch regulating mechanism (20) according to any of the preceding claims 1-7, wherein the first part is connected to the blade support structure, and wherein the second part is connected to the blade.

9. Vertical axis wind turbine according to claim 8, wherein the rotor comprises four blades (31, 32), the blades are all oriented substantially vertical and wherein each blade is coupled to the blade support structure by means of the pitch regulating mechanism.

10. Vertical axis wind turbine according to claim 8 or 9, wherein the blade pitch axis is arranged near the leading edge (38) of the blade.

11. Vertical axis wind turbine according to any of the preceding claims 8 - 10, wherein the blade is pivotally connected to the blade support structure at the longitudinal ends of the blade and the pitch regulating mechanism is arranged at a location along the longitudinal length of the blade.

12. Vertical axis wind turbine according to claim 11, wherein the pitch regulating mechanism is arranged at a location near the middle of the longitudinal length of the blade.

13. Vertical axis wind turbine according to any of the preceding claims 8 - 12, wherein the blade has a symmetrical cross section.

## Patentansprüche

1. Blattsteigungsregulierungsmechanismus (20) für eine Windkraftanlage (1) mit vertikaler Achse, der angeordnet ist, um die Blattsteigung (3) der Windkraftanlage in Abhängigkeit von einer auf die Windkraftanlage wirkenden Windkraft zu regulieren, wobei der Blattsteigungsregulierungsmechanismus umfasst:
- ein erster Teil (22),
- einen zweiten Teil (36), und
- eine Torsionsfederanordnung (26, 27, 28);
wobei das erste Teil so angeordnet ist, dass es mit einer Blatttragstruktur (4) der Windkraftanlage verbindbar ist, wobei das zweite Teil schwenkbar mit dem ersten Teil gekoppelt ist und das Torsionsfederanordnung zwischen dem ersten Teil und dem zweiten Teil angeordnet ist und angeordnet ist, um eine Schwenkfederkraft auf das erste und zweite Teil in zwei entgegengesetzten Drehrichtungen auszuüben, **dadurch gekennzeichnet, dass** die Torsionsfederanordnung eine erste Steifigkeit in der ersten Drehrichtung und eine zweite Steifigkeit in der zweiten Drehrichtung aufweist und dass die erste Steifigkeit einen niedrigeren Wert als die zweite Steifigkeit hat.

2. Blattsteigungsregulierungsmechanismus nach Anspruch 1, wobei die Torsionsfederanordnung eine Kurbelanordnung (26, 261, 262, 263), zum Übertragen einer Rotationsbewegung des zweiten Teils in eine Translationsbewegung umfasst, und eine erste (27) und zweites (28) elastisches Element, wobei die Kurbelanordnung und die elastischen Elemente derart angeordnet sind, dass das erste elastischen Element durch die Translationsbewegung verformt wird, wenn der zweite Teil in der ersten Drehrichtung gedreht wird, und das zweite elastische Element verformt wird, wenn der zweite Teil gedreht wird in die zweite Drehrichtung.

3. Blattsteigungsregulierungsmechanismus nach Anspruch 2, wobei die ersten und zweiten elastischen Elemente verformt werden, wenn das zweite Teil in der zweiten Drehrichtung gedreht wird.

4. Blattsteigungsregulierungsmechanismus nach Anspruch 2 oder 3 wobei das erste elastische Element weicher als dat zweite elastische Element ist.

5. Blattsteigungsregulierungsmechanismus nach einem der vorangehenden Ansprüche 2 - 4, wobei die ersten und zweiten elastischen Elemente durch Blattfedern gebildet sind.

6. Blattsteigungsregulierungsmechanismus nach einem der vorangehenden Ansprüche 2 - 5, wobei die Kurbelanordnung eine Welle (26) umfasst, wobei die Welle zwei sich nach außen erstreckenden Vorsprüngen (261, 262) in entgegengesetzter Richtung der Welle umfasst und wobei Kontaktrollen (263) auf den sich nach außen erstreckenden Vorsprüngen zum Kontaktieren der elastischen Elemente vorgesehen sind.

7. Blattsteigungsregulierungsmechanismus nach Anspruch 6, wobei einer der zwei sich nach außen erstreckenden Vorsprüngen im Wesentlichen dreieckig geformt ist und der andere der zwei sich nach außen erstreckenden Vorsprüngen im Wesentlichen rechteckig geformt ist.

8. Windkraftanlage (1) mit vertikaler Achse, umfassend:
- einen Generator (11), zum Erzeugen elektrischer Energie;
- einen Antriebsstrang (8, 9, 10), der an einem ersten Ende des Antriebsstrangs mit dem Generator gekoppelt ist;
- einen Rotor (2), der an einem zweiten Ende des Antriebsstrangs gekoppelt ist, wobei der Rotor eine Blattstützstruktur (4) umfasst, die sich von der Mitte des Rotors erstreckt,
- ein Blatt (3) das in einem Abstand von der Mitte des Rotors schwenkbar mit der Blattstützstruktur gekoppelt ist, wobei das Blatt im Wesentlichen vertikal ausgerichtet ist, und
- einen Blattsteigungsregulierungsmechanismus (20) nach einem der vorhergehenden Ansprüche 1-7, wobei der erste Teil mit der Blattstützstruktur verbunden ist und wobei der zweite Teil mit dem Blatt verbunden ist.

9. Windkraftanlage mit vertikaler Achse nach Anspruch 8, wobei der Rotor vier Blätter (31, 32) umfasst, die Blätter alle im Wesentlichen vertikal ausgerichtet sind und wobei jedes Blatt mit der Blattstützstruktur mittels des Blattsteigungsregulierungsmechanismus gekoppelt ist.

10. Windkraftanlage mit vertikaler Achse nach Anspruch 8 oder 9, wobei die Blattsteigungsachse nahe der Vorderkante (38) des Blattes angeordnet ist.

11. Windkraftanlage mit vertikaler Achse nach einem der vorangehenden Ansprüche 8 - 10, wobei das Blatt schwenkbar mit der Blattstützstruktur an den Längsenden des Blattes verbunden ist und der Blattsteigungsregulierungsmechanismus an einer Stelle entlang der Längserstreckung des Blattes angeordnet ist.

12. Windkraftanlage mit vertikaler Achse nach Anspruch 11, wobei der Blattsteigungsregulierungsmechanismus an einer Stelle nahe der Mitte der Längserstreckung des Blattes angeordnet ist.

13. Windkraftanlage mit vertikaler Achse nach einem der vorangehenden Ansprüche 8 - 12, wobei das Blatt einen symmetrischen Querschnitt hat.

## Revendications

1. Mécanisme de régulation de pas (20) pour une éolienne à axe vertical (1) agencé pour réguler le pas d'une pale (3) de l'éolienne en fonction de la force du vent agissant sur l'éolienne, dans lequel le mécanisme de régulation de pas comprend:
- une première pièce (22),
- une deuxième pièce (36), et
- un ensemble ressort de torsion (26, 27, 28);
dans lequel la première pièce est agencée pour pouvoir être connectée à une structure de support de pale (4) de l'éolienne, la deuxième pièce est agencée pour pouvoir être connectée à une pale (3), dans lequel la deuxième pièce est couplée de manière pivotante à la première pièce et l'ensemble de ressort de torsion est agencé entre la première pièce et la deuxième pièce et agencé pour exercer une force de ressort de torsion sur les première et deuxième pièces dans deux sens de rotation opposés, **caractérisé en ce que** l'ensemble de ressort de torsion a une première raideur dans le premier sens de rotation et une deuxième raideur dans le deuxième sens de rotation, et **en ce que** la première raideur a une valeur inférieure à la deuxième raideur.

2. Mécanisme de régulation de pas selon la revendication 1, dans lequel l'ensemble ressort de torsion comprend un ensemble manivelle (26, 261, 262, 263), pour transférer un mouvement de rotation de la deuxième pièce à un mouvement de translation, et un premier (27) et deuxième (28) élément élastique, dans lequel l'ensemble de manivelle et les éléments élastiques sont agencé de sorte que le premier élément élastique est déformé par le mouvement de translation lorsque la deuxième pièce est tournée dans le premier sens de rotation et le deuxième élément élastique est déformé lorsque la deuxième pièce est tourné dans le deuxième sens de rotation.

3. Mécanisme de régulation de pas selon la revendication 2, dans lequel les premier et deuxième éléments élastique sont déformés lorsque la deuxième pièce est tournée dans le deuxième sens de rotation.

4. Mécanisme de régulation de pas selon la revendication 2 ou 3 dans lequel le premier élément élastique est plus mou que le deuxième élément élastique.

5. Mécanisme de régulation de pas selon l'une quelconque des revendications 2 - 4, dans lequel les premier et deuxième éléments élastiques sont formés par des ressorts à lames.

6. Mécanisme de régulation de pas selon l'une quelconque des revendications 2 - 5, dans lequel l'ensemble de manivelle comprend un arbre (26), ledit arbre comprend deux saillies s'étendant vers l'extérieur (261, 262) dans la direction opposée à l'arbre, et dans lequel des galets de contact (263) sont prévus sur les protubérances s'étendant vers l'extérieur pour entre en contact avec les éléments élastiques.

7. Mécanisme de régulation de pas selon la revendication 6, dans lequel l'une des deux saillies s'étendant vers l'extérieur est de forme sensiblement triangulaire et l'autre des deux saillies s'étendant vers l'extérieur est de forme sensiblement rectangulaire.

8. Éolienne à axe vertical (1), comprenant:
- un générateur (11), pour générer de l'énergie électrique;
- un groupe motopropulseur (8, 9, 10), couplée audit générateur à une première extrémité du groupe motopropulseur;
- un rotor (2), couplé audit groupe motopropulseur à une deuxième extrémité du groupe motopropulseur, dans lequel le rotor comprend une structure de support de pale (4) s'étendant depuis le centre du rotor,
- une pale (3) couplée de manière pivotante à la structure de support de pale à distance du centre du rotor, dans laquelle la pale étant orientée sensiblement verticalement, et
- un mécanisme de régulation de pas (20) selon l'une quelconque des revendications 1-7, dans lequel la première pièce est connectée à la structure de support de pale, et dans lequel la deuxième pièce est connectée à la pale.

9. Éolienne à axe vertical selon la revendication 8, dans laquelle le rotor comprend quatre pales (31, 32), les pales sont toutes orientées sensiblement verticalement et dans laquelle chaque pale est couplée à la structure de support de pale au moyen du mécanisme de régulation de pas.

10. Éolienne à axe vertical selon la revendication 8 ou 9, dans laquelle l'axe de pas des pales est disposé à proximité du bord d'attaque (38) de la pale.

11. Éolienne à axe vertical selon l'une quelconque des revendications 8 - 10, dans laquelle la pale est reliée de manière pivotante à la structure de support de pale aux extrémités longitudinales de la pale et le mécanisme de régulation de pas est agencé à un emplacement le long de la longueur longitudinale de la pale.

12. Éolienne à axe vertical selon la revendication 11, dans laquelle le mécanisme de régulation de pas est agencé à un emplacement proche du milieu de la longueur longitudinale de la pale.

13. Éolienne à axe vertical selon l'une quelconque des revendications 8 - 12, dans laquelle la pale a une section transversale symétrique.
